# EUROPÄISCHE PATENTSCHRIFT

(11) **EP 3 025 084 B1**
(45) Veröffentlichungstag und Bekanntmachung des Hinweises auf die Patenterteilung: **12.06.2019**
(21) Anmeldenummer: 14736780.9
(22) Anmeldetag: 07.07.2014
(51) Int. Cl.: F16L 37/252, F16L 21/08, F16L 37/08, F16L 37/52

(54) **KUPPLUNGSANORDNUNG FÜR ROHRLEITUNGEN**
COUPLING ARRANGEMENT FOR PIPELINES
SYSTÈME D'ACCOUPLEMENT DE CONDUITS TUBULAIRES

(30) Priorität: 25.07.2013 DE 102013012369
(43) Veröffentlichungstag der Anmeldung: 01.06.2016
(73) Patentinhaber: Mann + Hummel GmbH, 71636 Ludwigsburg (DE)
(72) Erfinder: EILERT, Lorenz, 38176 Wendeburg (DE); REGENER, Guido, 38321 Klein Denkte (DE); SINKEMAT, Stefan, Bad Harzburg 38667 (DE); HOMANN, Jörg, 38126 Braunschweig (DE); FISCHER, Udo, 38104 Braunschweig (DE); LACHUT, Robert, 38690 Vienenburg (DE)
(86) Internationale Anmeldenummer: PCT/EP2014/064408
(87) Internationale Veröffentlichungsnummer: WO 2015/010880

(56) Entgegenhaltungen:
- EP-A1- 0 870 967
- DE-A1- 1 910 988
- DE-A1-102006 031 582
- FR-A- 1 469 580
- US-A1- 2005 264 007
- US-A1- 2011 225 789

## Beschreibung

### Technisches Gebiet

Die Erfindung betrifft eine Kupplungsanordnung für Rohrleitungen, insbesondere zur Herstellung einer quasistarren Rohrverbindung.

### Stand der Technik

Aus der EP2286132 A1 ist eine Kupplungsanordnung für Rohre bekannt, bei der eine Rohrmuffe ein männliches und ein weibliches Rohrteil verbindet. Die Rohrmuffe wirkt mit einer Innenkontur des weiblichen Rohrteils zusammen, um ein in der Rohraufnahme aufnehmbares Rohr gelenkig an die an das weibliche Rohrteil zu koppeln. Die Rohraufnahme weist dazu einen aus Abschnitten gebildeten Rohranschlag auf, die von einer Innenwand der Rohrmuffe abstehen.

In US 2011 225789 A1 wird eine Verbindungsanordnung beschrieben, bei der auf einer inneren Mantelfläche des weiblichen Rohrendes eine Umfangsnut vorhanden ist, in der ein Klemmring teilweise aufgenommen ist, der über einen federbelasteten Mechanismus in Axialrichtung verpresst wird, um eine kraft- und formschlüssige Verbindung der beiden Rohrenden zu erhalten.

Aus EP 0 870 967 A1 ist eine Verbindungsanordung bekannt, deren Kernbestandteil ein Klemmring mit keilförmigem Profil ist, der als Klemmkeil wirkt. In dem weiblichen Gegenstück ist eine innere Mantelfläche kegelig ausgebildet, sodass der Klemmring mit seiner kegeligen äußeren Mantelfläche darauf zur Anlage gebracht werden kann. Die Verbindungsanordnung wird dadurch verriegelt, dass das männliche Rohrstück ein Stück axial herausgezogen wird, wobei der Klemmring durch eine umlaufende Schweißraupe mitgenommen wird und schließlich in die kegelige Innenmantelfläche des weiblichen Verbindungspartners gepresst wird, wodurch eine kraftschlüssige Verbindung entsteht.

Die in FR 1 469 580 A offenbarte Verbindungsanordnung weist an dem axialen Ende des männlichen Rohrstücks eine verrundete Anfasung auf, die auf einer kegeligen Gegenfläche des weiblichen Verbindungspartners dichtend anliegt.

Aus DE 10 2006 031582 A1 ist eine Muffenverbindung bekannt, bei der ein Muffenende des weiblichen Verbindungspartners innenseitig einen flanschartigen Rand aufweist, der auf seiner Innenseite konisch ist. Der Rand ist jedoch nicht umfänglich durchgängig, sondern hat mehrere Unterbrechungen. Ferner ist ein Verriegelungsring vorgesehen, der über seinen Umfang verteilt mehrere Verriegelungselemente hat, die jeweils in die Unterbrechungen des Randes einlegbar sind, wobei diese durch Verdrehen verriegelt werden. Um das männliche Rohrende axial zu sichern, ist eine umlaufende Schweißraupe vorgesehen, über die eine auf das Spitzende ausgeübte Zugkraft über die Verriegelungselemente der Verriegelungsvorrichtung in das Muffenende ableitbar ist.

Die in DE 19 10 988 A1 offenbarte Rohrleitungskupplung weist eine Kugelverbindung auf, bei der auf Seiten des männlichen Verbindungspartners ein endständig auf ein Rohr geschweißtes teilsphärisches Teil vorgesehen ist, das in einer teilsphärischen Aushöhlung eines Anschlussstückes aufgenommen ist. Verspannt wird das teilsphärische Teil durch eine Schraubkappe, die eine Axialkraft auf das teilsphärische Teil ausübt und dieses in die teilsphärische Aushöhlung des Anschlussstückes presst.

Schließlich offenbart US 2005 264 007 A1 eine Klemmverschraubung mit einer Kugelgelenkanordnung.

### Offenbarung der Erfindung

Eine Aufgabe der Erfindung ist es, eine preiswerte und leicht montierbare Kupplungsahordnung zu schaffen, die insbesondere für quasi-starre Rohrverbindungen geeignet ist.

Die vorgenannte Aufgabe wird mit einer Kupplungsanordnung gemäß Anspruchs 1 gelöst, die zwei Kupplungsabschnitte und ein Verriegelungselement aufweist, das wenigstens bereichsweise zwischen die Kupplungsabschnitte eingreift und an einem Kupplungsabschnitt festgelegt ist, wobei das Verriegelungselement eine laterale Relativbewegung der Kupplungsabschnitte begrenzt.

Günstige Ausgestaltungen und Vorteile der Erfindung ergeben sich aus den weiteren Ansprüchen, der Beschreibung und der Zeichnung.

Es wird eine Kupplungsanordnung gemäß Anspruchs 1 vorgeschlagen, mit einem weiblichen Kupplungsabschnitt und einem männlichen Kupplungsabschnitt sowie einem Verriegelungselement, das wenigstens bereichsweise zwischen die Kupplungsabschnitte eingreift und das an einem der Kupplungsabschnitte festgelegt ist, wobei einer der Kupplungsabschnitte eine Verriegelungskontur aufweist, die mit einer Verriegelungskontur des Verriegelungselements zusammenwirkt, und wobei das Verriegelungselement einen Sperrabschnitt aufweist, der mit einem Sperrabschnitt des anderen Kupplungsabschnitts so zusammenwirkt, dass eine laterale Bewegung zwischen den Kupplungsabschnitten begrenzbar ist.

Im Gegensatz zum Stand der Technik ist keine separate Muffe oder Überwurfmutter zum Fixieren einer Verbindung zwischen den Kupplungsabschnitten erforderlich, da ein Kugelabschnitt am männlichen Kupplungsabschnitt direkt aus dem Bauteil des Kupplungsabschnitts gebildet werden kann. Dadurch wird auch kein Endanschlag für den betreffenden Kupplungsabschnitt benötigt. Der Einsatz aufwändiger und teurer Gummielemente zum Ausgleich von Bewegungen bei der Montage oder bei Temperaturwechsel im Betrieb kann vermieden werden.

Besonders geeignet ist die erfindungsgemäße Kupplungsanordnung zur Herstellung einer starren oder quasistarren Verbindung, etwa bei Ladeluftleitungen in Kraftfahrzeugen oder Verbindungen ohne dynamische Bewegungsbelastungen, insbesondere mit hohen Temperatur- und Druckbelastungen der Verbindung. Die Kupplungsanordnung kann die beim Einbau oder durch leichte Lageveränderungen zwischen Anschlusspunkten entstehenden Bewegungen leicht ausgleichen. Dabei können sowohl Längenänderungen von wenigen Millimetern als auch Winkelfehler von wenigen Grad zwischen den Kupplungsabschnitten ohne einseitige Spannungseinleitung in die Kupplungsanordnung ausgeglichen werden.

Insbesondere können bei Vorsehen von zwei Kupplungsabschnitten etwa in einer Rohrleitung Bewegungen zwischen Anschlusselementen bei starren Verbindungen mit nur geringen Abweichungen ausgeglichen werden. Die Kupplungsabschnitte können Endabschnitte zweier miteinander zu verbindender Rohrleitungen sein.

Gemäß einer günstigen Ausgestaltung können der Sperrabschnitt des Verriegelungselements und der Sperrabschnitt des Kupplungsabschnitts bei Kontakt einen Formschluss bilden. Hierdurch kann ein unerwünschtes Herausgleiten des männlichen Kupplungsabschnitts aus der Kupplungsanordnung effektiv unterbunden werden.

Das Verriegelungselement ist als Keilring ausgebildet. Das Verriegelungselement weist eine Auflagefläche auf einer Stirnseite des weiblichen Kupplungsabschnitts auf und einen Bund, der zwischen die Kupplungsabschnitte eingreift. Damit kann das Verriegelungselement einfach und platzsparend montiert werden. Vorteilhaft kann der Sperrabschnitt an einer Innenseite des Keilrings angeordnet sein und die Verriegelungskontur an einer Außenseite des Keilrings. Die Verriegelungskontur ist als Rasthaken ausgebildet, an dessen radial innen angeordneter Fläche der Sperrabschnitt ausgebildet ist, z.B. in Form eines komplementär zum Sperrabschnitt des männlichen Kupplungsabschnitts geformten Flächenbereichs. Denkbar ist jedoch auch eine nicht erfindungsgemäße alternative Ausgestaltung, bei der das Verriegelungselement bügelförmig ausgebildet ist mit einem außenseitigen Schenkel und einem innenseitigen Schenkel. Dann kann am außenseitigen Schenkel die Verriegelungskontur und am innenseitigen Schenkel der Sperrabschnitt vorgesehen sein. Die außenseitige Verriegelungskontur kann in diesem Fall mit einer Verriegelungskontur auf der Außenseite des weiblichen Kupplungsabschnitts zusammenwirken und der Sperrabschnitt am innenseitigen Schenkel mit dem Sperrabschnitt des männlichen Kupplungsabschnitts zusammenwirken.

Vorteilhaft kann das männliche Kupplungsstück an seiner Außenfläche eine Dichtungsnut aufweisen. Auf diese Weise kann eine druckdichte Verbindung sichergestellt werden.

Das Verriegelungselement ist zur bestimmungsgemäßen Montage im Durchmesser reversibel erweiterbar ausgebildet. Beispielsweise kann ein Schlitz im Verriegelungselement vorgesehen sein. Dadurch kann das Verriegelungselement bei der Montage einfach aufgeweitet werden, um es auf das entsprechende Kupplungsteil aufzuschieben.

Günstigerweise ist der kupplungsabschnittseitige Sperrabschnitt einen Bereich einer Außenfläche einer stirnseitigen Verdickung des männlichen Kupplungsabschnitts bilden. Dies ermöglicht eine sehr kompakte Anordnung ohne zusätzliche Bauelemente.

Mit besonderem Vorteil ist der kupplungsabschnittseitige Sperrabschnitt wenigstens bereichsweise ballig ausgebildet. Dadurch ist eine kugelförmige Lagerung der Kupplungsabschnitte erreicht, wodurch der Ausgleich von Winkelfehlern besonders effektiv erleichtert wird. Die Verbindung zwischen den Kupplungsabschnitten kann geschaffen werden, ohne dass das männliche Kupplungsstück unter einen speziellen Winkel in das weibliche Kupplungsstück eingesteckt und dann verriegelt werden muss, was die Montage vereinfacht. Die ballige Ausgestaltung der Verriegelung hat darüber hinaus den Vorteil, dass auf Grund dieser Formgebung die durch den Innendruck erzeugten Reaktionskräfte auch bei einem Winkelversatz zwischen den Fügepartnern zu einer gleichmäßigen Krafteinleitung in die Anschlussgeometrie führen. Somit werden keine Rückstellmomente in der Kupplungsanordnung erzeugt.

Gemäß einer weiteren Ausgestaltung kann die Verriegelungskontur des weiblichen Kupplungsabschnitts an einer Innenseite des weiblichen Kupplungsabschnitts angeordnet sein.

Die Verriegelungskonturen sind als Rastverbindung ausgebildet, so dass erlauben eine einfache, sichere Montage.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: ein Ausführungsbeispiel eines Ladeluftrohrs einer Brennkraftmaschine mit zwei Kupplungsanordnungen gemäß einer Ausgestaltung der Erfindung;
- Figur 2: in Explosionsdarstellung zwei Kupplungsabschnitte und ein Verriegelungselement einer Kupplungsanordnung gemäß einer Ausgestaltung der Erfindung;
- Figur 3: einen Schnitt durch eine Kupplungsanordnung nach einem Ausführungsbeispiel der Erfindung mit zwei Kupplungsabschnitten und einem Verriegelungselement vor dem Festlegen des Verriegelungselements an dem weiblichen Kupplungsabschnitt; und
- Figur 4: die Kupplungsanordnung aus Figur 3 nach dem Festlegen des Verriegelungselements an dem weiblichen Kupplungsabschnitt und nach Einführen des männlichen Kupplungsabschnitts.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

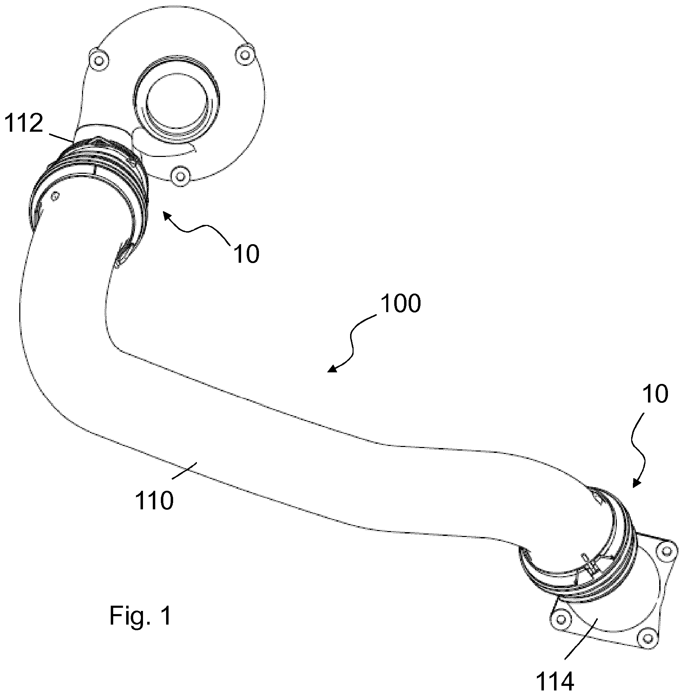

Zur Erläuterung der Erfindung zeigt Figur 1 ein Ausführungsbeispiel einer Ladeluftrohrleitung 100 einer Brennkraftmaschine mit zwei Kupplungsanordnungen 10 gemäß einer Ausgestaltung der Erfindung. Das Ladeluftrohr 110 ist an einem ersten Kupplungspunkt 112 über die erste Kupplungsanordnung 10 an ein erstes Rohrstück angeschlossen und an einem entfernt angeordneten Kupplungspunkt 114 über die zweite Kupplungsanordnung 10 an ein zweites Rohrstück angeschlossen. Die Ladeluftrohrverbindung 110 ist bestimmungsgemäß starr bzw. quasi starr, d.h. sie ist im Betrieb nicht für dynamische Bewegungen vorgesehen, sondern im Wesentlichen unbeweglich und soll bestimmungsgemäß allenfalls typische kleine Bewegungen durch Temperaturausdehnung oder bei der Montage durchführen. Dynamische Anwendungen sind jedoch ebenfalls denkbar.

Die Kupplungsanordnung 10 bildet jeweils eine Verbindung mit einer geringen Beweglichkeit zwischen zwei Rohren oder Rohrabschnitten. Die Kupplungsanordnung 10 erlaubt einen Ausgleich geringer Bewegungen zwischen den Rohrenden sowohl von Kippbewegungen als auch von lateralen Bewegungen. So kann die Kupplungsanordnung 10 Verkippungen von bis zu 3,5° und einen Längenversatz zwischen den beiden Rohren von wenigen Millimetern, etwa +/-3mm, ausgleichen. Die Bewegungsunterschiede werden dabei nicht dynamisch zwischen den beiden Endpunkten ausgeglichen, sondern die Kupplungsanordnung 10 wirkt lediglich als Ausgleichselement für die Montage des Systems und zum Toleranzausgleich zwischen zwei Anschlusspunkten. Um die Vorteile der Kupplungsanordnung 10 optimal nutzen zu können, empfiehlt es sich, die Kupplungsanordnung 10 als Paar vorzusehen.

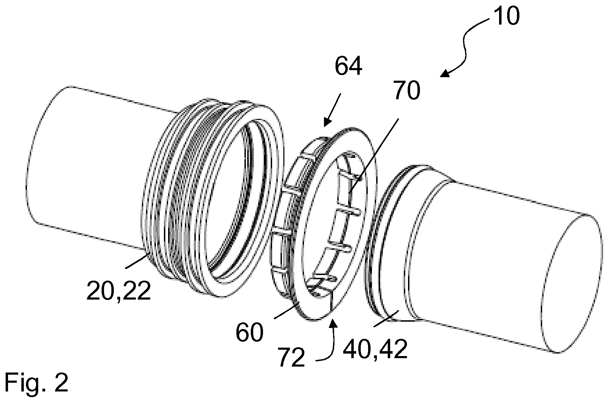

Figur 2 zeigt in Explosionsdarstellung zwei Kupplungsabschnitte 20, 40 und ein Verriegelungselement 60 einer Kupplungsanordnung 10 gemäß einer Ausgestaltung der Erfindung.

Die Kupplungsanordnung 10 umfasst einen weiblichen Kupplungsabschnitt 20 und einen männlichen Kupplungsabschnitt 40 sowie ein Verriegelungselement 60, das wenigstens bereichsweise zwischen die Kupplungsabschnitte 20, 40 eingreift. Das Verriegelungselement 60 ist als Ring, insbesondere als Keilring, ausgebildet und kann aufgeweitet werden, wozu im Umfang des Verriegelungselements 60 ein Schlitz vorgesehen ist.

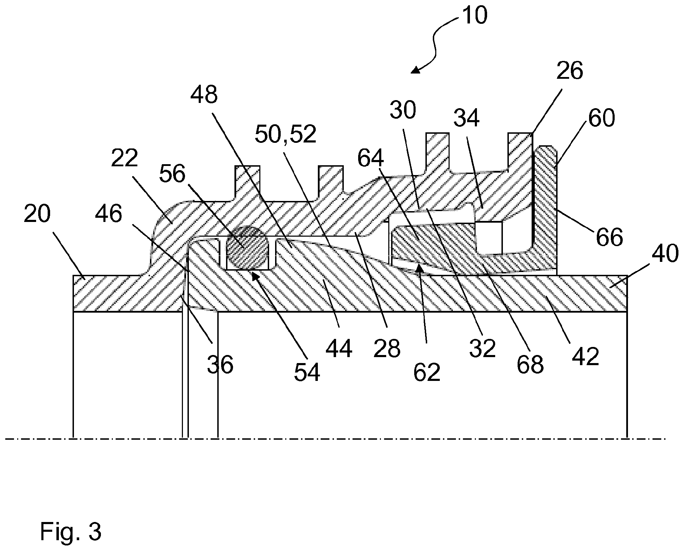

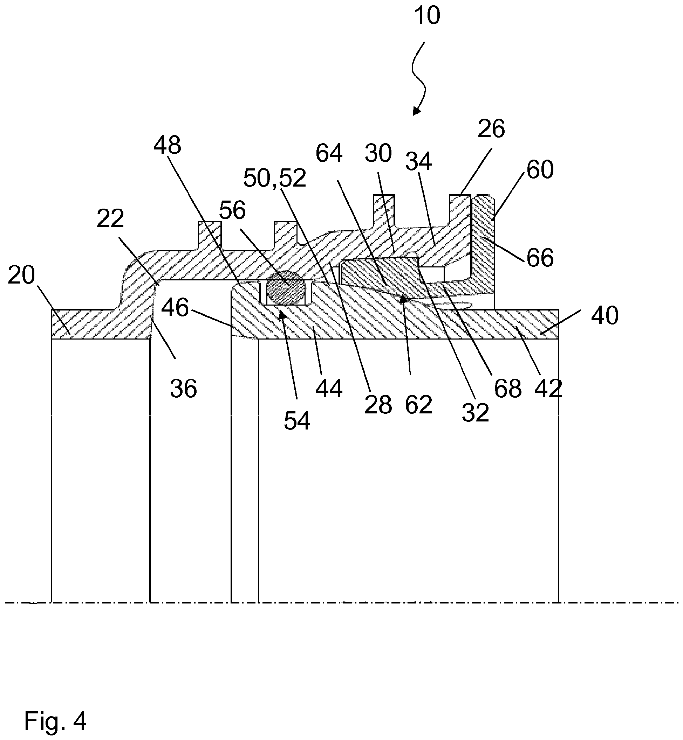

Das Verriegelungselement 60 ist an einem Kupplungsabschnitt 20, insbesondere dem weiblichen Kupplungsabschnitt 20 festgelegt, wobei der betreffende Kupplungsabschnitt 20 an seiner Innenseite (28 in Figuren 3 und 4) eine Verriegelungskontur (Bezugszeichen 34 in Figuren 3 und 4) aufweist, die mit einer Verriegelungskontur 64 des Verriegelungselements 60 zusammenwirkt, und das Verriegelungselement 60 einen Sperrabschnitt 62 aufweist, der mit einem Sperrabschnitt 52 des anderen Kupplungsabschnitts 40 so zusammenwirkt, dass eine laterale Bewegung zwischen den Kupplungsabschnitten 20, 40 begrenzbar ist. Im gezeigten Ausführungsbeispiel ist die Verriegelungskontur 64 an einem Bund 68, der zwischen die Kupplungsabschnitte 20, 40 eingreift, außen und der Sperrabschnitt 62 an der Innenseite 70 des Bunds 68 angeordnet.

Der weibliche Kupplungsabschnitt 20 bildet die Gelenkpfanne 22, der männliche Kupplungsabschnitt 40 eine Gelenkkugel 42 eines Kugelgelenks. Gelenkpfanne 22 und Gelenkkugel 42 können Teil eines anderen Bauteils sein, etwa eines Anschlussstutzens, eines Rohrelements oder dergleichen.

Wie in den Figuren 3 und 4 detaillierter ausgeführt ist, ist bei einer Ausgestaltung wie in Figur 2 im männlichen Kupplungsabschnitt 40 im Bereich des stirnseitigen Endes eine Verdickung 44 vorgesehen. Die Verdickung 44 ist vorteilhaft ballig ausgebildet und sorgt für die Kugellagerung des männlichen Kupplungsabschnitts 40 im weiblichen Kupplungsabschnitt 20.

Im verdickten Bereich ist eine Dichtungsnut 54 angeordnet, in die im montierten Zustand eine Dichtung 56, z.B. ein O-Ring, eingelegt ist. Die Dichtung 56 dient zur druckdichten Verbindung von Gelenkkugel 42 und Gelenkpfanne 22, d.h. des weiblichen und männlichen Kupplungsabschnitts 20, 40.

Der weibliche Kupplungsabschnitt 20 weist nahe seiner Stirnseite 26 innen eine Erweiterung 30 auf, die Platz für die Verriegelungskontur 64 des Verriegelungselements 60 bietet und einen Aufnahmeraum 32 bildet.

Das Verriegelungselement 60 ist ringförmig z.B. als Keilring ausgebildet, und greift mit einem Bund 68 axial zwischen die Kupplungsabschnitte 20, 40. Am Bund 68 ist ein Auflagering 66 vorgesehen, der zum Auflegen auf eine Stirnseite 26 des weiblichen Kupplungsabschnitts 20 dient. Der Bund 68 umfasst mehrere Verriegelungskonturen 64, z.B. radial nach außen weisende Rastnasen, die mit Verriegelungskonturen 34, z.B. radial von der Innenseite 28 nach innen weisende Vorsprünge, des weiblichen Kupplungsabschnitts 20 zusammenwirken.

Die Verriegelungskontur 64 des Verriegelungselements 60 weist radial innen einen Bereich mit einem Sperrabschnitt 62 auf, der korrespondierend zur Form eines Sperrabschnitts 52 des männlichen Kupplungsabschnitts 40 ausgebildet ist. Der Sperrabschnitt 52 bildet einen Bereich 50 der Außenfläche 48 der Verdickung 44 des männlichen Kupplungsabschnitts 40. Das Verriegelungselement 60 dient sowohl zum Fixieren des Verriegelungselements 60 am weiblichen Kupplungsabschnitt 20 als auch zum Begrenzen einer lateralen Bewegung des männlichen Kupplungsabschnitts 40 und verhindert so sicher ein Lösen der Verbindung zwischen den Kupplungsabschnitten 20, 40. Eine laterale Bewegung ist nur zwischen dem Pfannenboden 36 des weiblichen Kupplungsabschnitts 20 (Gelenkpfanne 22) und dem Sperrabschnitt 62 des Verriegelungselements 60 möglich, da der männliche Kupplungsabschnitt 40 in einer Richtung mit seiner Stirnseite 46 an den Pfannenboden 36 stößt und in Gegenrichtung mit seinem Sperrabschnitt 52 an den Sperrabschnitt 62 des Verriegelungselements 60 anstößt.

Zur Montage der Kupplungsanordnung 10 wird zunächst die Dichtung 56 auf der Gelenkkugel 42 (männlicher Kupplungsabschnitt 40) montiert, anschließend wird das Verriegelungselement 60, z.B. als Keilring ausgebildet, über die Verdickung 44 des männlichen Kupplungsabschnitts 40 geschoben und anschließend die Gelenkkugel 42 (männlicher Kupplungsabschnitt 40) mit montierter Dichtung 56 mit der Stirnseite 46 voran in die Gelenkpfanne 22 (weiblicher Kupplungsabschnitt 20) gepresst. Dabei liegt der Keilring (Verriegelungselement 60) außerhalb der Verdickung 44 auf der Gelenckugel 42 (männlicher Kupplungsabschnitt 40).

Das Verriegelungselement 60 (Keilring) wird ebenfalls in die Gelenkpfanne 22 (weiblicher Kupplungsabschnitt 20) gepresst. Dabei liegen die Rastnasen (Verriegelungskontur 64) am Keilring (Verriegelungselement 60) immer noch außerhalb der Verdickung 44 und können im Außendurchmesser zusammengepresst werden, bis sie unter der Verriegelungskontur 34 an der Gelenkpfanne 22 (weiblicher Kupplungsabschnitt 20) durchtauchen können.

Die Gelenkkugel 42 und der Keilring werden eingepresst, bis die Rastnasen (Verriegelungskontur 64) hinter den Vorsprüngen (Verriegelungskontur 34) der Gelenkpfanne 22 einrasten. Da der Außendurchmesser der Verriegelungskontur 64 größer ist als der Innendurchmesser der Verriegelungskontur 34, ist der Keilring (Verriegelungselement 60) sicher verriegelt und kann nicht mehr entfernt werden. Bei einer Zugbelastung der Kupplungsanordnung 10 wirkt der Keilring (Verriegelungselement 60) wie eine formschlüssige Verbindung gegenüber der Verdickung 44 an der Gelenkkugel 42 und verhindert ein Öffnen der Kupplungsanordnung 10. Dabei bilden der Sperrabschnitt 62 auf der Innenseite der Verriegelungskontur 64 des Verriegelungselements 60 und der Sperrabschnitt 52 des männlichen Kupplungsabschnitts 40 auf der Verdickung 44 bei Kontakt den Formschluss, indem sie in ihrer Form komplementär ausgebildet sind, z.B. der Sperrabschnitt 52 auf der Verdickung 44 konvex nach außen gewölbt (ballig) und der Sperrabschnitt 62 konkav nach innen gewölbt.

Um den Keilring (Verriegelungselement 60) über die Verdickung 44 der Gelenkkugel 42 montieren zu können, ist es notwendig, denn Keilring zu weiten. Daher ist der Keilring an einer Stelle offen (Schlitz 72, Figur 2), so dass sich der Keilring öffnen und über die Verdickung 44 an der Gelenkkugel 42 montieren lässt.

## Patentansprüche

1. Kupplungsanordnung (10) für Rohrleitungen, mit einem weiblichen Kupplungsabschnitt (20) und einem männlichen Kupplungsabschnitt (40) sowie einem Verriegelungselement (60), das wenigstens bereichsweise zwischen die Kupplungsabschnitte (20, 40) eingreift und das an einem der Kupplungsabschnitte (20) festgelegt ist, wobei einer der Kupplungsabschnitte (20) eine Verriegelungskontur (34) aufweist, die mit einer Verriegelungskontur (64) des Verriegelungselements (60) zusammenwirkt, und das Verriegelungselement (60) einen Sperrabschnitt (62) aufweist, der mit einem Sperrabschnitt (52) des anderen Kupplungsabschnitts (40) so zusammenwirkt, dass eine laterale Bewegung zwischen den Kupplungsabschnitten (20, 40) begrenzbar ist, wobei der kupplungsabschnittsseitige Sperrabschnitt (52) einen Bereich (50) einer Außenfläche (48) einer stirnseitigen Verdickung (44) des männlichen Kupplungsabschnitts (40) bildet und wenigstens bereichsweise ballig ausgebildet ist und wobei das Verriegelungselement (60) als Keilring ausgebildet ist mit einer Auflagefläche (66) auf einer Stirnseite (26) des weiblichen Kupplungsabschnitts (20) und einem Bund (68), der zwischen die Kupplungsabschnitte (20, 40) eingreift, wobei das Verriegelungselement (60) zur bestimmungsgemäßen Montage im Durchmesser reversibel erweiterbar ausgebildet ist und die Verriegelungskonturen (34, 64) als Rastverbindung ausgebildet sind.

2. Kupplungsanordnung nach Anspruch 1, wobei die Verriegelungskontur (64) des Verriegelungselements (60) in einem Bereich angeordnet ist, welcher zwischen die Kupplungsabschnitte (20, 40) eingreift.

3. Kupplungsanordnung nach Anspruch 1 oder 2, wobei der Sperrabschnitt (62) des Verriegelungselements (60) und der Sperrabschnitt (52) des Kupplungsabschnitts (40) bei Kontakt einen Formschluss bilden.

4. Kupplungsanordnung nach einem der vorhergehenden Ansprüche, wobei die Verriegelungskontur (34) des weiblichen Kupplungsabschnitts (20) an einer Innenseite (28) des weiblichen Kupplungsabschnitts (20) angeordnet ist.

5. Verwendung der Kupplungsanordnung (10) nach einem der Ansprüche 1 bis 4, zur Herstellung einer quasistarren Verbindung von Gasrohren, insbesondere Ladeluftrohren (110).

## Claims

1. Coupling assembly (10) for piping, having a female coupling section (20) and a male coupling section (40) as well as a locking element (60) which engages at least in some areas between the coupling sections (20, 40) and which is fixed at one of the coupling sections (20), wherein one of the coupling sections (20) features a locking contour (34) which cooperates with a locking contour (64) of the locking element (60), and the locking element (60) features a locking portion (62) which cooperates with a locking portion (52) of the other coupling section (40) in such a way that a lateral movement between the coupling sections (20, 40) can be limited, wherein the locking portion (52) on the side of the coupling section forms an area (50) of an outer surface (48) of a frontal bulge (44) of the male coupling section (40) and is at least in some areas convex and wherein the locking element (60) is designed as conical ring with a contact surface (66) on a front side (26) of the female coupling section (20) and a collar (68) which engages between the coupling sections (20, 40), wherein the locking element (60) is designed to be reversibly expandable in diameter for intended assembly, and the locking contours (34, 64) are designed as a snap-in connection.

2. Coupling assembly according to claim 1, wherein the locking contour (64) of the locking element (60) is disposed in an area which engages between the coupling sections (20, 40).

3. Coupling assembly according to claim 1 or 2, wherein the locking portion (62) of the locking element (60) and the locking portion (52) of the coupling section (40) create a positive engagement during contact.

4. Coupling assembly according to one of the preceding claims, wherein the locking contour (34) of the female coupling section (20) is disposed on an interior side (28) of the female coupling section (20).

5. Use of the coupling assembly (10) according to one of the claims 1 to 4 for realizing a quasi-rigid connection of gas pipes, in particular charge-air pipes (110).

## Revendications

1. Système d'accouplement (10) pour tuyauterie, avec une section d'accouplement femelle (20) et une section d'accouplement mâle (40) ainsi qu'un élément de verrouillage (60) qui s'engrène, au moins dans certaines zones, entre les sections d'accouplement (20, 40) et qui peut être fixé sur l'une des sections d'accouplement (20), l'une des sections d'accouplement (20) présentant un contour de verrouillage (34) qui coopère avec un contour de verrouillage (64) de l'élément de verrouillage (60), et l'élément de verrouillage (60) présentant une section de blocage (62) qui coopère avec une section de blocage (52) de l'autre section d'accouplement (40) de sorte qu'un mouvement latéral entre les sections d'accouplement (20, 40) peut être limité, la section de blocage (52) du côté de la section d'accouplement formant une zone (50) d'une surface extérieure (48) d'un renflement frontal (44) de la section d'accouplement mâle (40) et étant bombée au moins dans certaines zones et l'élément de verrouillage (60) étant réalisé en tant que bague conique avec une surface d'appui (66) sur une face frontale (26) de la section d'accouplement femelle (20) et un collet (68) qui s'engrène entre les sections d'accouplement (20, 40), l'élément de verrouillage (60) étant réalisé de manière réversiblement extensible et les contours de verrouillage (34, 64) étant réalisés en tant que liaison par encliquetage.

2. Système d'accouplement selon la revendication 1, le contour de verrouillage (64) de l'élément de verrouillage (60) étant disposé dans une zone qui s'engrène entre les sections d'accouplement (20, 40).

3. Système d'accouplement selon la revendication 1 ou 2, la section de blocage (62) de l'élément de verrouillage (60) et la section de blocage (52) de la section d'accouplement (40) forment, lors d'un contact, un engagement positif.

4. Système d'accouplement selon l'une des revendications précédentes, le contour de verrouillage (34) de la section d'accouplement femelle (20) étant disposé sur la face interne (28) de la section d'accouplement femelle (20).

5. Utilisation du système d'accouplement (10) selon l'une des revendications 1 à 4 pour réaliser un raccordement quasi rigide de tubes à gaz, en particulier tubes pour air de suralimentation (110).
